# EUROPÄISCHE PATENTSCHRIFT

(11) **EP 1 002 755 B1**
(45) Veröffentlichungstag und Bekanntmachung des Hinweises auf die Patenterteilung: **14.04.2004**
(21) Anmeldenummer: 99121101.2
(22) Anmeldetag: 22.10.1999
(51) Int. Cl.: B65H 29/58, B65H 33/16, B65G 47/82, B65G 51/03, B65H 31/30

(54) **Vorrichtung zum Ausschleusen von Blattlagen aus einer Förderlinie**
Device for separating sheet piles from a transfer line
Dispositif pour séparer des cahiers de feullies d'une ligne de transport

(30) Priorität: 10.11.1998 DE 19851780
(43) Veröffentlichungstag der Anmeldung: 24.05.2000
(73) Patentinhaber: E.C.H. WILL GmbH, D-22529 Hamburg (DE)
(72) Erfinder: Wolf, Wolfram, 25485 Bilsen (DE)
(74) Vertreter: Eisenführ, Speiser & Partner

(56) Entgegenhaltungen:
- EP-A- 0 252 752
- EP-A- 0 327 858
- DE-A- 2 063 304
- DE-A- 19 743 423
- DE-C- 19 731 656
- GB-A- 2 134 891
- US-A- 3 822 777
- US-A- 4 589 812
- US-A- 5 660 095

## Beschreibung

Die Erfindung betrifft eine Vorrichtung zum Ausschleusen von Blattlagen, insbesondere von Papierriesen, aus einer ersten Förderlinie, mit einem ersten Förderband mit einer ersten Förderrichtung zum Transport der Blattlagen auf der ersten Förderlinie; mit einer Versetzeinrichtung zum Versetzen der Blattlagen aus der ersten Förderlinie, mit einer Aufnahmeeinrichtung zum Aufnehmen der aus der ersten Förderlinie versetzten Blattlagen.

Derartige Vorrichtungen sind aus dem Stand der Technik bekannt. Diese Vorrichtungen werden im Stand der Technik in der papierverarbeitenden Industrie verwendet. Ein Zweig dieser papierverarbeitenden Industrie ist die Herstellung sogenannter Riese. Bei diesen Riesen handelt es sich um Blattlagen aus Blättern aus Papier, Karton, Folie, Kunststoff u.dgl., die in größerer Anzahl, d.h. bspw. in einer Anzahl von 500 Blättern oder mehr, übereinander zu Blattlagen gestapelt sind. Um derartige Riese herzustellen, werden auf Blätterherstellmaschinen, auch Schneidemaschinen oder Sheeter genannt, von Bobinen des entsprechenden Materials abgezogene Bahnen aus Papier, Karton, Folie, Kunststoff o.dgl. in Einzelblätter geschnitten und diese Einzelblätter dann anschließend zu Lagen oder zu Stapeln vorzugsweise konstanter Blattzahl, d.h. den eigentlichen Blattlagen bzw. Riesen angesammelt. Von den Schneidemaschinen werden im Stand der Technik zumeist gleichzeitig mehrere Blattlagen nebeneinander in einer Reihe angeordnet zur Verfügung gestellt.

Die einzelnen Riese oder Riesreihen werden dann anschließend den gewünschten Weiterverarbeitungseinrichtungen zugeführt. Dies geschieht zumeist mit Förderbändern. Derartige als Zwischenglied zwischen dem Sheeter und der weiterverarbeitenden Maschine dienende Förderbänder müssen dabei unterschiedlichste Aufgaben erfüllen. Eine dieser Aufgaben liegt darin, daß die im Stand der Technik existierenden Sheeter inzwischen sehr hohe Ausstoßfrequenzen erreicht haben. Soll nun der entsprechende Ausstoß an Riesen bspw. von einer Verpackungsmaschine zur Verpackung der von dem Sheeter hergestellten Riese weiter verarbeitet werden, so ergibt dies aufgrund der hohen Ausstoßfrequenz des Sheeters Probleme. Denn die heute auf dem Markt befindlichen Verpackungsmaschinen können die hohen Ausstoßfrequenzen des Sheeters nicht mit der gleichen Geschwindigkeit weiter verarbeiten. Die von dem Sheeter hergestellten Riese bzw. Riesreihen müssen daher im Stand der Technik auf zwei oder mehrere Verpackungsmaschinen aufgeteilt werden. Somit besteht im Stand der Technik die Aufgabe, an irgendeiner Stelle auf dem als Verbindung dienenden Förderband zwischen dem Sheeter und der Verpackungsmaschine die Riese oder Riesreihen aufzuteilen. Dies geschieht im Stand der Technik dadurch, dass nach einem gewissen Schema einzelne Riese oder ganze Riesreihen auf ein zweites Förderband, welches zu einer zweiten Verpackungsmaschine führt, überführt werden.

Ein derartiges Überführen von Riesen oder Riesreihen auf ein zweites Förderband ist jedoch auch dann notwendig, wenn eine der weiterverarbeitenden Maschinen eine Störung aufweist oder ausfällt. Denn dann kann auf dem dieser Maschine zu- arbeitenden Förderband keine Zufuhr von Riesen mehr vorgenommen werden. In einen solchen Fall müssen daher alle Riese oder Riesreihen auf das zweite Förderband überführt werden. In beiden Fällen ist es jedenfalls aufgrund der hohen Verarbeitungsgeschwindigkeit der Sheeter des Standes der Technik notwendig, dass auch die Überführungseinrichtungen die Riese oder Riesreihen schnell und ohne Behinderung von einem Förderband zum anderen transportieren können.

Die vorliegende Erfindung beschäftigt sich gattungsgemäß daher damit, Blattlagen, insbesondere Riese bzw. Riesreihen aus einer Förderlinie auszuschleusen bzw. von einer Förderlinie auf eine andere zu überführen.

Aus der EP 0 327 858 A1 ist ein Verfahren für die Beschickung von Stanzen, Inline-Maschinen oder dergleichen mit Paketen, die aus flach aufeinanderliegenden Wellpappebogen bestehen, bekannt. Zur Reduzierung des für die Abnahme eines Paketes apparativen Aufwandes wird dort vorgeschlagen, das abzunehmende Paket zuerst einseitig anzuheben, dann quer von einem Rollenförderer gebildeten Hauptförderrichtung zu verlagern und dann auf seiner über den Reststapel hinausragenden Seite zu untergreifen, anzuheben und aus dem Paketbildungsbereich herauszufördem und schließlich in der ursprünglichen Förderrichtung weiter zu befördern.

Aus der DE-OS 2 063 304 ist eine Vorrichtung zum Einbringen und Ausbringen von zu Paketen zusammengefassten, von Hochdruck- oder Tiefdruck- Rotationsmaschinen abgegebenen Zeitschriften-Teilprodukten in Transportbehälter bzw. aus diesen. Hierzu wird das Zeitschriften-Teilprodukt entweder von oben in ein Karton absenkt oder aus einem Karton heraus von unten herausgehoben und jeweils auf einer senkrecht zur ursprünglichen Förderlinie verlaufenden Förderlinie weiter befördert.

Aus der US 4,589,812 ist ein Verfahren und eine Vorrichtung zum Akkumulieren von Papierbogen in Papierstapel offenbart, bei dem auf einer ersten Förderlinie in einer ersten Förderrichtung laufende Papierstapel gegen einen Stopper laufen und so zu einer Gruppe zusammengefügt werden, weiche Gruppe dann von einem quer zur ersten Förderrichtung verlaufenden Schieber auf einen Fahrstuhl geschoben wird, der sukzessive nach unten fährt, bis die gewünschte Stapelhöhe von dem Schieber auf den Fahrstuhl geschoben wurde, so dass schließlich das auf dem vollständig abgesenkten Fahrstuhl gebildete Gesamtpaket von dem Schieber aus dem Fahrstuhl heraus auf eine zweite senkrecht zur ersten Förderlinie verlaufende Förderlinie verschoben wird.

Eine bekannte Einrichtung zum Überführen von Blattlagen von einer Förderlinie auf eine andere zeigt bspw. die DE 44 15 047 A1. In dieser Druckschrift wird beschrieben, wie bei einer Störung auf einer Förderlinie zum Abtransportieren der Blattlagen von dem Sheeter die Blattlagen auf eine zweite parallel zu der ersten

Förderlinie verlaufende Förderlinie verbracht werden können. Zu diesem Zweck offenbart die vorgenannte Druckschrift zwei Förderbänder, die Stau- bzw. Beschteunigungsstrecken aufweisen, um die von dem Sheeter herrührenden Reihen von Blattlagen in einen Abstand zueinander zu bringen. Weiterhin zeigt die Druckschrift diagonal zu den vorgenannten Förderbändern verlaufende dritte Förderbänder, die bei Störung einer weiterverarbeitenden Maschine die Blattlagen des einen auf diese gestörte Maschine zulaufenden Förderbandes auf das andere, auf die ungestörte Maschine zulaufende Förderband mit Hilfe der Diagonalförderbänder verbringen können.

Nachteilig bei diesem Stand der Technik ist es, daß die von einem Förderband auf das andere Förderband zu verbringenden Riese durch die Diagonalförderbänder bzw. durch die Diagonalbewegung und dem damit verbundenen Richtungswechsel Kräften ausgesetzt werden, die die genaue Ordnung, d.h. das perfekte Übereinanderliegen der einzelnen Blätter in dem jeweiligen Ries gefährden. Dies stellt einen schwerwiegenden Nachteil dar, da aufgrund der bereits mehrfach erwähnten hohen Geschwindigkeit der Sheeter ein verrutschter Papierstapel den Produktionsbetrieb erheblich aufhalten würde. Darüber hinaus läßt sich ein solch unsymmetrischer Ries auch nicht mehr oder nur unter ganz erheblichen Qualitätseinbußen weiter verarbeiten.

Ein weiterer Stand der Technik, der sich mit Förderbändern zwischen einem Sheeter und einer Weiterverarbeitungseinrichtung beschäftigt, ist in der DE 44 21 325 A1 offenbart. Diese Vorrichtung zeigt ein Förderband zwischen dem Sheeter und der weiterverarbeitenden Maschine. Weiterhin sind quer über das Förderband verlaufende und arbeitende Schiebereinrichtungen vorgesehen, die die aus dem Förderband ankommenden Riese im Falle des Ausfalls einer weiterverarbeitenden Einrichtung in eine Staustrecke verschieben können.

Nachteilig bei dem zuletzt genannten Stand der Technik ist es, daß zum einen die Schiebeeinrichtungen in dem Bewegungsweg der auf dem Förderband geförderten Riese arbeiten, und zum anderen, daß durch das Vorsehen einer Staustrecke offensichtlich ein erheblicher, kostenintensiver und zeitraubender Zusatzaufwand notwendig ist.

Ein weiterer Stand der Technik ist aus der DE-OS 27 08 131 bekannt. Bei der dort gezeigten Vorrichtung zum Überführen von Papierbogenstapeln von einer Produktionseinrichtung auf zwei Verpackungseinrichtungen sind diagonal zwischen den Förderbändern verlaufende Schienen vorgesehen. Auf diesen Schienen laufen wiederum Paletten, die die eigentlichen Blattlagen tragen. Der Transport der auf den Paletten angeordneten Blattlagen wird durch entsprechende Weichen gesteuert.

Nachteilig bei dieser bekannten Anlage ist es, daß aufgrund der Schienen ein sehr hoher konstruktiver Aufwand zum Überführen notwendig ist. Darüber hinaus ist es bei dieser bekannten Anlage nachteilig, daß die Riese auf speziellen für diese Anlage ausgebildeten Paletten geführt werden müssen.

Neben den zuvor anhand des Standes der Technik beschriebenen Anlagen, bei denen die hergestellten Papierriese zwischen zwei Förderbändern hin- und herbewegt werden müssen, existieren im Stand der Technik auch Vorrichtungen zum Ausschleusen von Papierstapeln aus einer Förderlinie. Ein derartiges Ausschleusen kann auch zunächst den bereits zuvor ausführlich beschriebenen Zwecken dienen, nämlich den ausgeschleusten Papierstapel bzw. die ausgeschleusten Papierstapel auf ein zweites Förderband zu verbringen oder einer weiteren Verarbeitungseinrichtung zuzuführen. Das Ausschleusen von Papierriesen kann jedoch auch dazu dienen, fehlerhafte Riese dem fortlaufenden Produktionsprozeß zu entnehmen. Ebenso wie bei dem Ausschleusen eines Rieses zum Verbringen auf ein zweites Förderband ist auch bei dem einfachen Ausschleusen die hohe Verarbeitungsgeschwindigkeit der Sheeter zu beachten. Das bedeutet, daß auch beim Ausschleusen von Papierriesen aus einer Förderlinien bzw. von einem Förderband herunter dieses Ausschleusen möglichst schnell und ohne Behinderung für die nachfolgenden Riese geschehen muß.

Einen Stand der Technik, der das Ausschleusen eines Papierstapels zeigt, offenbart die US 3,822,777. In dieser Druckschrift wird ein Schieber offenbart, welcher ein auf einem Förderband laufendes Ries von diesem Förderband durch einfaches seitliches Herunterschieben auf ein zweites Förderband ausschleust. Nachteilig bei diesem Stand der Technik ist es, wie auch bei den zuvor genannten Maschinen, daß der Schieber beim Herausschieben des Rieses in den Förderweg der nachfolgenden Riese gelangt. Es kommt daher durch das Herausschiebens eines Rieses zu einer erheblichen Behinderung des Produktionsprozesses.

Ein weiterer Stand der Technik, welcher sich mit dem Ausschleusen von Papierriesen aus einer Förderlinie beschäftigt, ist in der DE 34 03 215 A1 offenbart. Diese Druckschrift zeigt, wie mit Hilfe eines quer zur Förderrrichtung verlaufenden zweiten Förderbandes ein Papierries aus dem Förderweg herausgeschleust werden kann. Zum Zweck des Herausschleusens wird dabei das oberhalb des Förderbandes angeordnete Ausschleusband von oben auf das Papierries herabgesenkt. Gleichzeitg werden von unten Rollen, die eine Gleitbewegung des auszuschleusenden Papierrieses quer zur Förderrichtung ermöglichen, aus dem Förderband herausgefahren. Somit wird das auszuschleusende Papierries von oben und von unten mit Kraft beaufschlagt und derart zusammengedrückt seitlich aus der Förderrichtung weg befördert.

Nachteilig bei dieser bekannten, den nächstliegenden Stand der Technik zeigenden Ausschleusvorrichtung ist es jedoch, daß auf das auszuschleusende Papierries erhebliche Kräfte einwirken. Diese erheblichen Kräfte haben zum einen eine Verformung des Papierrieses zur Folge die - wie oben bereits erwähnt - völlig unerwünscht ist; zum anderen entstehen auf dem Papierries auch durch die Rollen bzw. durch die querverlaufenden Ausschleusförderbänder Markierungen, die ebenfalls absolut unerwünscht sind. Schließlich ist es besonders nachteilig, daß das querverlaufende Förderband auch dann noch im Bewegungsweg der auf der Förderlinie nachfolgenden Papierriese arbeitet, wenn das eigentlich auszuschleusende Papierries bereits außerhalb dieser Förderlinie ist.

Weiterhin betrifft die Erfindung einen Lufttisch zur Aufnahme von Gegenständen, mit einer Vielzahl von Öffnungen in einer dem aufzunehmenden Gegenstand zugewandten Oberfläche des Lufttisches, aus denen Luft zur Bildung eines Luftkissens zwischen der Oberfläche und der Unterseite des auf dem Lufttisch befindlichen Gegenstandes austreten kann, mit Kugelventilen in den Öffnungen, die den Luftstrom bei dem Aufsetzen des aufzunehmenden Gegenstandes auf die Oberfläche des Lufttisches freigeben.

Ein derartiger Lufttisch ist beispielsweise aus der DE 24 49 620 C2 bekannt. Diese Druckschrift zeigt einen Lufttisch, indem in den vorgenannten Öffnungen längliche Verschlußglieder angeordnet sind.

Ein weiterer vorbekannter Lufttisch ist in der DE 31 22 632 A1 offenbart. Bei diesem Lufttisch sind die bereits zuvor erwähnten Kugeln in den Öffnungen des Lufttisches vorgesehen. Diese Druckschrift zeigt den nächstliegenden Stand der Technik bezüglich des erfindungsgemäßen Lufttisches.

Nachteilig bei den aus dem Stand der Technik vorbekannten Lufttischen ist es jedoch, daß die Lufttische mit relativ hohen Luftdrücken arbeiten, um die als Verschlußglieder der Öffnungen des Lufttisches dienenden Elemente in ihre Verschlußstellung drücken zu können. Derartige Luftdrücke sind jedoch insbesondere in der papierverarbeitenden Industrie von erheblichem Nachteil. Denn sie können zu einer Verformung der auf dem Lufttisch befindlichen Riese führen.

Weiterhin betrifft die Erfindung ein Verfahren zum Ausschleusen von Blattlagen aus einer ersten Förderlinie, mit den Schritten: die Blattlagen werden auf der ersten Förderlinie von einem ersten Förderband in einer ersten Förderrichtung transportiert, der Transport der Blattlagen in der ersten Förderrichtung wird unterbrochen, um die Blattlagen ausschleusen zu können.

Derartige Verfahren zum Ausschleusen von Blattlagen sind aus den bereits oben erwähnten Druckschriften bekannten. Nachteilig bei den bekannten Verfahren ist jedoch, daß der Förderprozess auch noch nach dem Ausschleusen bzw. dem Abtransport des auszuschleusenden Rieses für kurze Zeit unterbrochen bleibt, da die entsprechenden Transport- bzw. Versetzeinrichtungen zum Ausschleusen des Papierrieses noch kurz nach dem Ausschleusen des Papierrieses in der Förderlinie verbleiben und somit die nachfolgenden Papierriese unvorteilhaft lange behindern.

Andere Verfahren des Standes der Technik zeigen den Nachteil, daß die Verfahren die Versetzeinrichtung noch in ihre ursprüngliche Position zurückfahren müssen, bevor die Förderlinie weiter betrieben werden kann. Dieser Schritt des Zurückversetzens stellt daher einen erheblichen Nachteil dar, da er den Produktionsprozeß bzw. die Weiterverarbeitung verlangsamt. Dies wiegt schwer, da angesichts der bereits oben erwähnten Schnelligkeit der Sheeter jede Verlangsamung der weiterverarbeitenden Einrichtungen, zu denen auch die zu diesen weiterverarbeitenden Einrichtungen führenden Förderbänder gehören, unbedingt vermieden werden muß.

Aufgabe der vorliegenden Erfindung ist daher, bei einer Vorrichtung der eingangs genannten Art die eingangs genannten Nachteile zu vermeiden, und eine schnellere und reibungslosere Beförderung bzw. Weiterverarbeitung von Blattlagen zu ermöglichen.

Eine weitere Aufgabe der vorliegenden Erfindung ist es, bei einem Lufttisch der vorgenannten Art die oben genannten Nachteile zu vermeiden und einen Lufttisch der vorgenannten Art zur Verfügung zu stellen, bei dem bereits mit geringem Luftdruck in dem Lufttisch ein Verschieben der darauf befindlichen Gegenstände möglich ist.

Eine weitere Aufgabe der vorliegenden Erfindung ist es, ein Verfahren zu schaffen, welches die im Zusammenhang mit dem zuvor beschriebenen Verfahren auftretenden Nachteile vermeidet, und es ermöglicht, mit möglichst wenig Verfahrensschritten eine Ausschleusung einer Blattlage bzw. das Überführen einer Blattlage von einer ersten Förderlinie zu einer zweiten Förderlinie zu ermöglichen, und dabei für eine minimale Behinderung der Förderlinien zu sorgen.

Die erste Aufgabe wird bei einer Vorrichtung der eingangs genannten Art durch die Merkmales des Anspruches 1 bzw. 20 gelöst.

Die Vorteile der erfindungsgemäßen Vorrichtung zum Ausschleusen von Blattlagen bzw. des entsprechenden Verfahrens zum Ausschleusen von Blattlagen aus einer ersten Förderlinie liegen insbesondere darin, daß aufgrund der von oben auf die Blattlagen einwirkenden Versetzeinrichtung, wobei die Versetzeinrichtung beabstandet zu der Oberseite der Blattlagen angeordnet ist, und wobei die Versetzeinrichtung die Blattlagen zum Versetzen derselben von der Seite her ergreift, die Nachteile, die aus dem Stand der Technik bekannt sind, vermieden werden.

Darüber hinaus ist es mit Hilfe der erfindungsgemäßen Vorrichtung und dem erfindungsgemäßen Verfahren möglich, Blattlagen und insbesondere Papierriese aus einer Förderlinie auszuschleusen und gleichzeitig deren perfekte Übereinanderschichtung zu erhalten, ohne daß die Geschwindigkeit der Förderlinie derart beeinträchtigt wird, wie dies im Stand der Technik bekannt ist. Denn durch die Einwirkung der Versetzeinrichtung von oben auf die Blattlagen - und nicht wie im Stand der Technik quer über das Förderband hinweg - benötigt die erfindungsgemäße Versetzeinrichtung im wesentlichen nur die Breite des zu versetzenden Papierrieses bzw. der zu versetzenden Blattlage, um diese zu versetzen. Die Versetzeinrichtung blockiert daher bei der Versetzbewegung nur den Bereich, der ohnehin von dem jeweilig zu versetzenden Papierries eingenommen ist. Die erfindungsgemäße Versetzeinrichtung ragt jedoch nicht quer über den Förderweg der Papierriese hinüber, so daß bei der Erfindung die Förderlinie den nächsten Papierstapel unmittelbar nach dem Verlassen des auszuschleusenden Papierstapels an der Ausschleusposition vorbei fördern kann, ohne auf eine den ausgeschleusten Papierstapel noch absetzende Versetzeinrichtung warten zu müssen.

Besonders vorteilhaft bei der Erfindung ist es darüber hinaus, daß durch die oberhalb der Förderlinie angeordnete Versetzeinrichtung und das erfindungsgemäße von oberhalb der Förderlinie ausgehende seitliche Ergreifen des auszuschleusenden Blattstapels die Versetzeinrichtung in eine Ruheposition oberhalb der Blattlagen zurückfahrbar ist, sobald die Versetzbewegung bzw. die Ausschleusbewegung abgeschlossen ist. Das bedeutet, daß das Zurückfahren der Versetzeinrichtung in ihre Position über dem ersten Förderband keine Behinderung des ersten Förderbandes zur Folge hat. Dies ist ein entscheidender Unterschied zum Stand der Technik. Denn die im Stand der Technik verwendeten Schieber oder Zangen stehen nicht nur beim Ausschleusen eines Papierstapels von dem ersten Förderband den nachfolgenden Papierstapeln im Weg, sondern verbleiben beim Zurückfahren in ihre Ursprungsposition weiterhin im Förderweg des ersten Förderbandes. Im Stand der Technik ist daher das erste Förderband solange blockiert, bis die Versetzeinrichtung wieder in ihre ursprüngliche Position zurückgefahren ist. Durch die vorliegende Erfindung wird die Blockade des ersten Förderbandes somit gegenüber dem Stand der Technik in ganz erheblichem Maße auf die kurze Zeitspanne reduziert, in der die Versetzeinrichtung das auszuschleusende Ries von dem ersten Förderband versetzt. Unmittelbar nach dem Zeitpunkt, zu dem die Versetzeinrichtung den Förderweg des ersten Förderbandes verlassen hat, kann das erste Förderband weiter betrieben werden. Es kommt daher durch die vorliegende Erfindung zu einer ganz erheblichen Geschwindigkeitssteigerung der in der papierverarbeitenden Industrie notwendigen Förderbänder, im Anschluß an Sheeter arbeitend auch Querförderer genannt.

Die Erfindung zeichnet sich auch dadurch aus, daß die Versetzeinrichtung ein zum Versetzen der Blattlagen in Eingriff mit den Blattlagen bringbarer Schieber ist, der die Blattlagen an ihren parallel zur Förderrichtung auf dem Förderband verlaufenden Seiten ergreift.

Bei der Erfindung sind die Seitenwände des Kastens verschwenkbar als Schwenkklappen ausgebildet. Bei dieser Hierbei muß die gesamte Versetzeinrichtung bzw. der gesamte Schieber nicht senkrecht zur ersten Förderrichtung hoch und runter gefahren werden, sondern es reicht aus, daß nur die Schwenkklappen des Schiebers herunter geklappt werden, um eine zu versetzende Blattlage zu ergreifen. Sobald die Blattlage versetzt ist, können die Schwenkklappen wieder nach oben geklappt werden, so daß der derart ausgebildete Schieber wieder zurück über das erste Förderband verfahren werden kann, ohne die Arbeit des ersten Förderbandes zu behindern. Erst wenn wieder eine Blattlage auszuschleusen ist, schwenken die Schwenkklappen, deren Schwenkachse bevorzugt parallel zur Förderrichtung des ersten Förderbandes verläuft, in ihre Eingriffsposition an die parallel zur Förderrichtung verlaufenden Seiten des oder der auszuschleusenden Blattlagen heran, um so in Eingriff mit den entsprechenden Seiten der Blattlagen zu gelangen. Durch diese Ausführungsform wird es daher vorteilhaft möglich, eine Seitenkraft auf die zu versetzenden Blattlagen mit Hilfe der Schwenkklappen auszuüben. Die zu versetzende Blattlage bzw. die zu versetzende Blattlagenreihe kann daher seitlich fixiert versetzt werden. Dies ist insbesondere bei Riesen von Vorteil, da diese somit ihre genaue, für die Weiterverarbeitung wichtige Form behalten.

In diesem Zusammenhang zeichnet sich eine besonders vorteilhafte Ausführungsform der Erfindung dadurch aus, daß gleichzeitig mit dem Heranschwenken der Schwenkklappen seitlich an die zu versetzende Blattlage bzw. die zu versetzenden Blattlagen von oben auf die Blattlagen eine Kraft in Richtung auf das erste Förderband ausgeübt wird. Diese Kraft kann beispielsweise durch ein von oben auf die zu versetzende Blattlage aufgesetztes Gewicht ausgeübt werden. Dieses Aufsetzen des Gewichtes geschieht vorzugsweise synchronisiert mit dem Heranschwenken der Schwenkklappen. Durch diese Ausführungsform wird daher der zu versetzende Blattstapel sowohl in Versetzrichtung als auch von oben her fixiert. Bei dieser Ausführungsform ist daher eine optimale Aufrechterhaltung der exakten Schichtung der einzelnen Blätter der Blattlagen bzw. der Riese während des Versetzens möglich. Nach Abschluß der Versetzbewegung wird dann das von oben auf die Blattlage drückende Gewicht wieder abgehoben. Auch dies geschieht bevorzugt gleichzeitig bzw. synchron mit dem Wegschwenken der zum Verschieben der Blattlage dienenden Schwenkklappen des Schiebers.

Besonders bevorzugt ist eine Ausführungsform, bei der die Schwenkklappen in der Ruheposition des Schiebers in eine im wesentlichen horizontal verlaufende Ebene hochgeklappt sind, während die Schwenkklappen zum seitlichen Einwirken auf die zu versetzenden Blattlagen um etwa 90° nach unten in Richtung auf das erste Förderband seitlich an die zu versetzende Blattlage herangeschwenkt werden. Durch die horizontale Anordnung der Schwenkklappen in ihrer Ruheposition bieten die Schwenkklappen einen möglichst geringen Luftwiderstand. Dies reduziert die Verwirbelungen bei dem Zurückfahren des Schiebers mit den Schwenkklappen in die Position über dem ersten Förderband.

Bei einer weiteren Ausführungsform der Erfindung ist die Luftverwirbelung weiterhin dadurch reduziert, daß die Schwenkklappen des als Versetzeinrichtung dienenden Schiebers mit einer Vielzahl von Löchern versehen sind, durch die Luft beim Versetzen der Blattlagen hindurchtreten kann. Somit wird die für die Symmetrie des zu versetzenden Papierstapels wichtige Reduzierung der Luftverwirbelung weiter verbessert.

Eine weitere bevorzugte Ausführungsform der Erfindung zeichnet sich dadurch aus, daß das erste Förderband in einem Tisch, bevorzugt in einem Lufttisch, verläuft. Dabei kann das Förderband in seiner Breite quer zur Förderrichtung auch schmaler als die zu fördernden Blattlagen gewählt sein. Denn bei dem in den Tisch eingelassenen Förderband kann dann die geförderte Blattlage auf dem Tisch gleiten.

Bei einer anderen Ausführungsform senkt sich das Förderband synchron zu dem Versetzen der Blattlagen ab. Auf diese Weise stört das Förderband nicht die Versetzbewegung der Blattlage durch die Versetzeinrichtung.

Besonders bevorzugt ist eine Ausführungsform der Erfindung, die eine zweite Förderlinie aufweist, bei der ein zweites Förderband mit einer parallel zur ersten Förderrichtung verlaufenden zweiten Förderrichtung vorgesehen ist. Diese Ausführungsform zeichnet sich dadurch aus, daß mit Hilfe der Versetzeinrichtung die Blattlagen von einem der Förderbänder auf das jeweils andere Förderband verschiebbar sind. Diese Ausführungsform der Erfindung kann daher eingesetzt werden, um die von einem Sheeter angelieferten Papierriese auf zwei zu den Verpackungsmaschinen laufende Förderbänder zu verteilen. Genau wie bei der oben beschriebenen Ausschleusung von Blattlagen bzw. Papierriesen können auch bei dieser Ausführungsform ganze Reihen von Papierriesen gleichzeitig mit Hilfe der seitlich an diesen Reihen angegreifenden Versetzeinrichtung von einem Förderband auf das andere versetzt werden.

Die vorgenannte Ausführungsform überwindet daher vorteilhafterweise die im Stand der Technik bekannten Nachteile beim Versetzen von Riesreihen oder Einzelriesen von einem Förderband auf ein zweites. Denn die erfindungsgemäße Versetzeinrichtung behindert das erste Förderband nur solange, wie sie die zu versetzende Riesreihe von dem ersten Förderband entfernt. Sobald die Versetzeinrichtung mit der zu versetzenden Riesreihe das erste Förderband verlassen hat, kann das erste Förderband ohne Behinderung weiter arbeiten, während die Riesreihe von der Versetzeinrichtung noch auf das zweite Förderband versetzt wird. Auch die Rückfahrbewegung der Versetzeinrichtung in ihre Position über dem ersten Förderband behindert den Betrieb des ersten Förderbandes erfindungsgemäß nicht.

Bei der zuvor genannten Ausführungsform ist es bevorzugt, wenn beide Förderbänder in einem Lufttisch eingelassen sind, welcher auch die beiden Förderbänder miteinander verbindet. Auf diese Weise können die zu versetzenden Blattlagen bzw. die zu versetzenden Riese bzw. Riesreihen an dem ersten Förderband ergriffen werden, dann mit Hilfe der Versetzeinrichtung über den zwischen den Förderbänder vorgesehenen Lufttisch geschoben werden und anschließend auf dem zweiten Förderband - sich immer noch auf dem Lufttisch abstützend - wieder abgesetzt werden, um von dem zweiten Förderband zu einer Weiterverarbeitungsmaschine weiter befördert zu werden.

Dabei ist es besonders bevorzugt, wenn es sich bei dem Lufttisch um den erfindungsgemäßen Lufttisch mit Kugeln aus Kunststoff handelt, denn die erfindungsgemäßen Kugeln, die bevorzugt aus Leichtkunststoff bestehen, senken den für den Lufttisch erforderlichen Luftdruck, da Kunststoffkugeln leichter als Metallkugeln sind und somit zum Schließen der Luftaustrittsöffnungen wenig Krafteinwirkung durch den Luftdruck des Lufttisches benötigen.

Aufgrund des geringeren Luftdruckes des erfindungsgemäßen Lufttisches im Vergleich zum Stand der Technik findet beim Versetzen der Blattlagen zwischen den einzelnen Förderbändern eine geringere Verwirbelung der zu versetzenden Blattlagen bzw. der zu versetzenden Riese bzw. der zu versetzenden Riesreihen statt. Dies erhöht insgesamt die Qualität der mit einer derartigen Vorrichtung ausgestatteten Papierherstellungsmaschinen bzw. Förderbänder.

Weitere bevorzugte Ausführungsformen der Erfindung sind in den Unteransprüchen angegeben.

Es wird nun eine bevorzugte Ausführungsform der Erfindung mit Bezug auf die begleitenden Zeichnungen beschrieben.

Es zeigen:
- Figur 1: zeigt eine Ausführungsform einer erfindungsgemäßen Vorrichtung in einer Vorderansicht;
- Figur 2: zeigt einen Ausschnit aus Figur 1; und
- Figur 3: zeigt ein Schema der Arbeitsweise der Vorrichtung gemäß Figur 1.

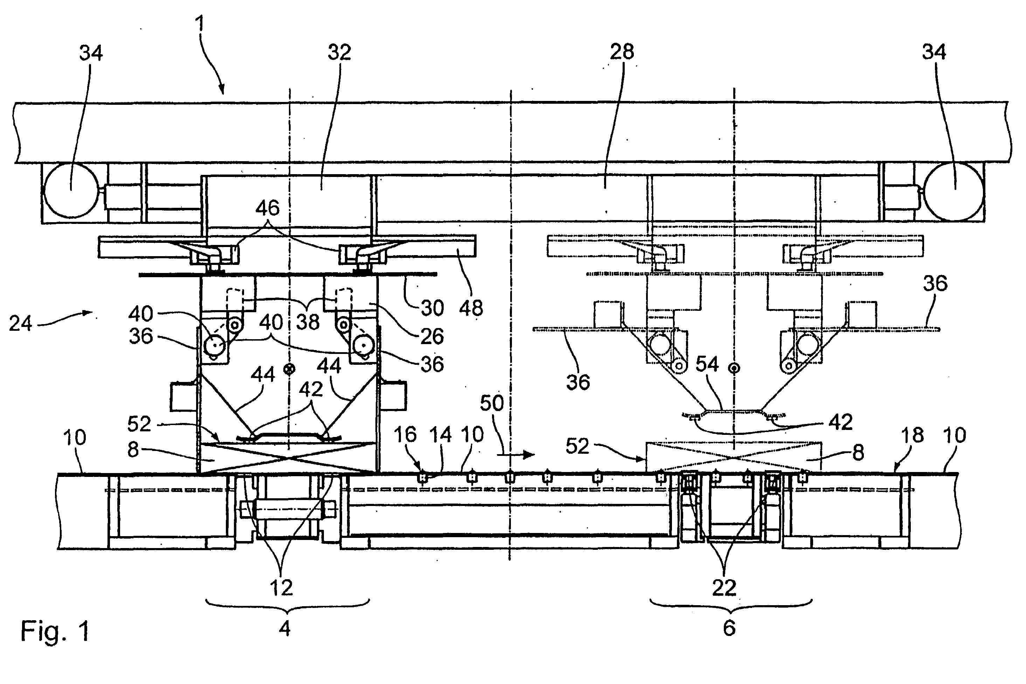

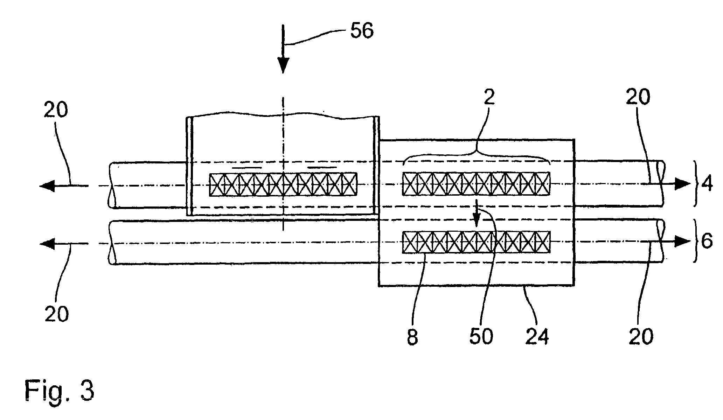

Die Figur 1 zeigt eine erfindungsgemäße Vorrichtung zum Überführen von Riesreihen 2 (siehe Figur 3) von einer ersten Förderlinie 4 auf eine parallel zu der ersten Förderlinie 4 verlaufende zweite Förderlinie 6. Die von der ersten Förderlinie 4 auszuschleusenden und auf die zweite Förderlinie 6 zu versetzenden Riesreihen 2 bestehen aus mehreren Riesen 8.

Die erste Förderlinie 4 besteht aus zwei ersten, in einen Lufttisch 10 eingelassenen Förderbändern 12. Die Förderbänder 12 verlaufen parallel zu einer Förderrichtung 20 der Förderlinie 4. Der Lufttisch 10 weist Öffnungen 14 auf, in die Kugelventile 16 eingearbeitet sind. Durch eine nicht dargestellte Luftdruckzufuhr kann in einem nicht dargestellten Hohlraum in dem Lufttisch 10 ein Luftdruck aufgebaut werden, welcher von unten gegen die Kugelventile 16 der Öffnungen 14 des Lufttisches 10 drückt. Die Kugelventile 16 werden daher über die Oberfläche 18 des Lufttisches 10 hinaus aus dem Lufttisch 10 herausgedrückt. Dieser Zustand ist beispielsweise in der Mitte der Figur 1 dargestellt. Sobald sich ein Gegenstand, beispielsweise ein Papierries 8 auf dem Lufttisch 10 befindet, drückt dieser Gegenstand mit seinem Gewicht die Kugelventile 16 in die Öffnungen 14 hinein. Dadurch wird der Gegenstand von einem durch den durch die Öffnungen 14 ausströmenden Luftdruck zwischen der Oberfläche 18 und der Unterseite eines solchen Gegenstandes gebildeten Luftkissen beabstandet zu der Oberfläche 18 gehalten. Auf diesem Luftkissen kann der Gegenstand dann auf dem Lufttisch 10 gleiten.

Das vorgenannte Gleiten des Gegenstandes bzw. der dargestellten Riese 8 geschieht auch, wenn die Riese 8 auf den Förderlinien 4 bzw. 6 befördert werden. Die Förderrichtung 20 verläuft in der Figur 1 senkrecht zur Papierebene. Dabei kann mit einem nicht dargestellten Umschalter die Förderrichtung 20 um 180° verändert werden, wie dies durch die Pfeile 20 in der Figur 3 angedeutet ist.

In der Figur 1 links dargestellten ersten Förderlinie 4 befindet sich eine Riesreihe 2 aus mehreren Riesen 8. In der Figur 1 rechts dargestellten zweiten Förderlinie 6 ist nur eine gestrichelt dargestelltes Ries 8 dargestellt. Es ist zu erkennen, daß das gestrichelt dargestellte Ries 8 von parallel zu den ersten Förderbändern 1 2 verlaufenden zweiten Förderbändern 22 getragen bzw. befördert wird. Gleichzeitig lagert die Riesreihe 2 bzw. die einzelnen Riese 8 jeweils auf beiden Förderlinien 4, 6 auf den Kugeln 16 des Lufttisches 10.

In der in der Figur 1 links dargestellten Situation befinden sich die ersten Förderbänder 12 in einem in dem Lufttisch 10 abgesenkten Zustand. Somit lagert das einzelne Ries 8 und somit die Riesreihe 2 nicht mehr auf den Förderbändern 12, sondern auf dem nicht dargestellten Luftkissen zwischen der Oberfläche 18 des Lufttisches 10 und der Unterseite der Riese 8.

Oberhalb der Förderlinie 4 ist eine Versetzeinrichtung 24 dargestellt. Die Versetzeinrichtung 24 ist der Kern, der auch als "Transposer" bezeichneten erfindungsgemäßen Vorrichtung 1. Die Versetzungeinrichtung 24 besteht im wesentlichen aus einem Schieber 26 und einer Führung 28 für den Schieber 26. Der Schieber 26 ist beabstandet zu dem Lufttisch 10 angeordnet. Der Schieber 26 weist eine Grundplatte 30 auf. Die Grundplatte 30 ist über eine Aufhängung 32 an der Führung 28 der Versetzeinrichtung 24 aufgehängt. Mit Hilfe eines Antriebes 34 läßt sich die Aufhängung 32 und damit die Versetzeinrichtung 24 entlang der Führung 28 parallel zur Ebene des Lufttisches 10 und quer zu der Förderrichtung 20 zwischen der ersten Förderlinie 4 und der zweiten Förderlinie 6 verschieben.

Unterhalb der Grundplatte 30 weist der Schieber 26 zwei Schwenkplatten 36 auf. Die Schwenkplatten sind in der Figur 1 in der oberhalb der ersten Förderlinie 4 dargestellten Position in ihrer Eingriffsposition mit dem zu versetzenden Blattries 8 dargestellt. In dieser Eingriffsposition befinden sich die die Schwenkplatten 36 senkrecht zu der Oberfläche 18 des Lufttisches 10. Um in diese Position zu kommen, sind die Schwenkplatten 36 mit Hilfe eines nur schematisch dargestellten Schwenkplattenantriebes 38 um ihre parallel zur Förderrichtung der ersten Förderlinie 4 verlaufenden Schwenkachsen 40 seitlich an die Riesreihe 2 mit den Riesen 8 herangeschwenkt worden. Gleichzeitig mit dem Heranschwenken der Schwenkplatten 36 senken sich über Seile 44 an den Schwenkplatten 36 aufgehängte Gewichte 42 von oben auf die zu versetzenden Blattriese 8 herab. Durch die Gewichte 42 wird das einzelne Ries 8 der zu versetzenden Riesreihe 2 gegen den Lufttisch 10 gedrückt. Auf diese Weise kommt es nicht zu einer Verformung der Riese 8 bei dem Verschieben der Riesreihe 2 mit Hilfe der Versetzeinrichtung 24 von der ersten Förderlinie 4 zu der zweiten Förderlinie 6.

Um den Schieber 26 der quer zur Förderrichtung der Förderlinien 4 bzw. 6 verlaufenden Breite der einzelne Riese anpassen zu können, weist die Versetzeinrichtung oberhalb der Grundplatte 30 noch einen Verstellmechanismus 46 auf. Mit Hilfe dieses Verstellmechanismus 46 können die Schwenkachsen 40 der Schwenkplatten 36 des Schiebers 26 senkrecht zur Förderrichtung verschoben werden und somit der entsprechenden Riesbreite angepaßt werden. Zu diesem Zweck läuft der Verstellmechanismus 46 mit den anhängenden Schwenkplatten entlang einer Verstellführung 48.

Sobald die Versetzeinrichtung 24 die Schwenkplatten 36 des Schiebers 26 und die Gewichte 42 in die in der Figur 1 oberhalb der ersten Förderrichtung 4 dargestellte Position gebracht hat, können die Förderbänder 12 abgesenkt werden und die Riese 8 der Riesreihe 2 in der Figur 1 nach rechts in Richtung auf die zweite Förderlinie 6 verschoben werden. Diese Verschiebung der Riesreihe 2 ist ebenfalls in der Figur 3 durch den Pfeil 50 angedeutet. Bei dieser Verschiebung entlang des Pfeils 50 gleitet die Riesreihe 2 mit den Unterseiten der einzelnen Riese 8 auf einem Luftkissen auf der Oberfläche 18 des Lufttisches 10. Dabei wird die Riesreihe 2 und werden die einzelne Riese 8 der Riesreihe 2 von den Schwenkplatten 36 und den Gewichten 42 in ihrer ursprünglichen Form gehalten.

Sobald die in der Figur 1 ganz links dargestellte Schwenkplatte 36 das rechte der beiden Förderbänder 12 in Richtung auf die zweite Förderlinie 6 verlassen hat, können die Förderbänder 12 wieder hochgefahren werden, so daß der Betrieb der ersten Förderlinie 4 wieder aufgenommen werden kann. Währenddessen befindet sich die Riesreihe 2 noch auf dem Weg in Richtung auf die zweite Förderlinie 6. Sobald die Riesreihe 2 an der zweiten Förderlinie 6 angelangt ist, werden die Schwenkplatten 36 entlang den Schwenkachsen 40 nach oben geklappt. Diese nach oben geklappte Position der Schwenkplatten 36 ist in der Figur 1 oberhalb der zweiten Förderlinie 6 dargestellt.

Gleichzeitig mit dem Hochschwenken der Schwenkplatten 36 um die Schwenkachsen 40 in eine zu der Oberfläche 18 des Lufttisches 10 parallele Ebene ziehen die Seile 44 die Gewichte 42 nach oben weg von der Oberfläche 52 der einzelnen Riese 8. Damit die Gewichte 42 bei dieser Aufwärtsbewegung nicht unkontrolliert ausschwenken, sind die Gewichte 42 mit einer Strebe 54 fest miteinander verbunden.

Sobald die Gewichte 42 die Oberfläche 52 der einzelnen Riese 8 der Riesreihe 2 verlassen, können die zweiten Förderbänder 22 der zweiten Förderlinie 6 wieder von unten an die Riese 8 der Riesreihe 2 herangefahren werden, so daß unmittelbar nach dem Abheben der Gewichte 42 ein Betrieb der zweiten Förderlinie 6 wieder stattfinden kann. Somit kann der Betrieb der zweiten Förderlinie 6 bereits wieder aufgenommen werden, obwohl sich die Versetzeinrichtung 24 - wie in der Figur 1 gestrichelt dargestellt - noch über der zweiten Förderlinie 6 befindet.

Zur Aufnahme einer weiteren Riesreihe 2 fährt die Versetzeinrichtung 24 zurück in die in der Figur 1 links dargestellte Position. Dort beginnt für die Verschiebung einer weiteren Riesreihe 2 die bereits oben beschriebene Prozedur des Heranschwenkens der Schwenkplatten 36 um die Schwenkachsen 40 an die zu versetzende Riesreihe 2. Während der Rückwärtsbewegung der Versetzeinrichtung 24 ist auf beiden Förderlinien 4 und 6 normaler Betrieb möglich.

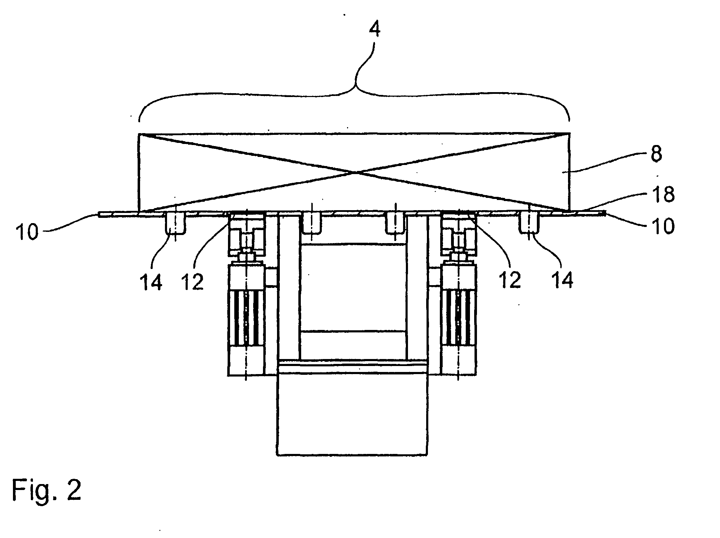

Die Figur 2 zeigt den in der Figur 1 links dargestellten Ausschnitt in einer Vergrößerung. Dabei wurde die Versetzeinrichtung 24 weggelassen.

Die Figur 3 zeigt - wie bereits erwähnt - das Prinzip der Verschiebung der Riesreihen 2 zwischen den einzelnen Förderlinien 4 bzw. 6. Insbesondere zeigt die Figur 3 mit Hilfe der Pfeile 20, daß die Förderrichtungen der Förderlinien 4 und 6, d.h. die Arbeitsrichtungen der Förderbänder 12 bzw. 22 jeweils um 180° gedreht werden können. Die erfindungsgemäße Vorrichtung zum Überführen von Riesreihen 2 von einer ersten Förderlinie 4 auf eine parallel zu dieser verlaufenden zweiten Förderlinie 6 läßt sich daher individuell den Gegebenheiten anpassen. So können die in der Figur 3 sich rechts und links an die Förderlinien 4 bzw. 6 anschließenden (nicht dargestellten) Verarbeitungsmaschinen mit Hilfe der Versetzeinrichtung 24 individuell an die durch den symbolischen Pfeil 56 dargestellte Leistungsfähigkeit eines nicht dargestellten Sheeters angepaßt werden.

## Patentansprüche

1. Vorrichtung zum Versetzen von mehreren Blattlagen (8), insbesondere von Papierriesen, aus einer ersten Förderlinie (4),
mit einem ersten Förderband (12) mit einer ersten Förderrichtung (20) zum Transport der Blattlagen (8) auf der ersten Förderlinie (4),
mit einer Versetzeinrichtung (24) zum Versetzen der Blattlagen (8) aus der ersten Förderlinie (4),
mit einer Aufnahmeeinrichtung (10) zum Aufnehmen der aus der ersten Förderlinie (4) versetzten Blattlagen (8),
**dadurch gekennzeichnet, dass** die Versetzeinrichtung (24)
- auf der ersten dem Förderband (12) abgewandten Seite der Blattlagen (8), beabstandet zu den Blattlagen (8) angeordnet ist,
- die Blattlagen (8) beim Versetzen derselben, von der dem ersten Förderband (12) abgewandten Seite der Blattlagen (8) ausgehend, von der Seite her ergreift,
- ein zum Versetzen der Blattlagen (8) in Eingriff mit den Blattlagen (8) bringbarer Schieber (26) ist,
wobei sich der Schieber (26) in einer Ruheposition beabstandet zu den Blattlagen (8) befindet, und zum parallelen Versetzen der Blattlagen (8) die Blattlagen (8) an ihren parallel zur Förderrichtung (26) verlaufenden beiden Seiten mit Hilfe von an die Seiten der Blattlagen (8) heranschwenkbaren Greifelementen (36) ergreift, und sie parallel verschiebt.

2. Vorrichtung nach Anspruch 1,
**dadurch gekennzeichnet, dass** die Greifelemente Schwenkklappen (36) sind.

3. Vorrichtung nach Anspruch 2,
**dadurch gekennzeichnet, dass** die Schwenkachse (40) der Schwenkklappen (36) parallel zur Förderrichtung verläuft.

4. Vorrichtung nach Anspruch 3,
**dadurch gekennzeichnet, dass** die Schwenkklappen (36) in der Ruheposition des Schiebers (26) in eine im wesentliche parallel zur Ebene des Förderbandes (12) verlaufende Ebene hochgeklappt sind, während die Schwenkklappen (36) zum seitlichen Ergreifen der zu versetzenden Blattlagen (8) um etwa 90° nach unten in Richtung auf das Förderband (12) seitlich an die Blattlagen (8) herangeschwenkt werden.

5. Vorrichtung nach Anspruch 4,
**dadurch gekennzeichnet, dass** die Schwenkklappen (36) nach Abschluß der Versetzbewegung in die parallel zum Förderband (12) verlaufende Ebene zurückktappbar sind, so daß der sich somit in seiner Ruheposition befindende Schieber (26) beabstandet zur Ebene der Oberseite (52) der Blattlagen (8) wieder in seine Position oberhalb des ersten Förderbandes (12) zurückfahrbar ist.

6. Vorrichtung nach einem der vorstehenden Ansprüche,
**dadurch gekennzeichnet, dass** der Schieber (26) entlang einer oberhalb des Förderbandes (12), quer zur Förderrichtung (20) angeordneten Führung (28) verfahrbar ist.

7. Vorrichtung nach einem der vorstehenden Ansprüche,
**dadurch gekennzeichnet, dass** die Versetzeinrichtung (24) die Blattlagen (8) im wesentlichen quer (50) zur Förderrichtung (20) versetzt.

8. Vorrichtung nach einem der vorstehenden Ansprüche,
**dadurch gekennzeichnet, dass** das Förderband (12) in einer Ausnehmung in einem Tisch (10) läuft.

9. Vorrichtung nach Anspruch 8,
**dadurch gekennzeichnet, dass** der Tisch ein Gleittisch (10) ist, auf dem die von dem Förderband (12) transportierten Blattlagen (8) gleiten können.

10. Vorrichtung nach Anspruch 9,
**dadurch gekennzeichnet, dass** das Förderband (12) zum Versetzen der Blattlagen (8) unter eine Gleitebene (18) des Gleittisches (10) absenkbar ist.

11. Vorrichtung nach Anspruch 10,
**dadurch gekennzeichnet, dass** die Absenkung des Förderbandes (12) synchron mit dem Versetzen der Blattlagen (8) erfolgt.

12. Vorrichtung nach einem der vorstehenden Ansprüche,
mit einer zweiten Fördertinie (6), die ein zweites Förderband (22) mit einer parallel zur ersten Förderrichtung (20) verlaufenden zweiten Förderrichtung (20) aufweist,
**dadurch gekennzeichnet, dass** mit Hilfe der Versetzeinrichtung (24) die Blattlagen (8) von einem der Förderbänder (12, 22) auf das jeweils andere Förderband (12, 22) versetzbar sind.

13. Vorrichtung nach Anspruch 12,
**dadurch gekennzeichnet, dass** die Aufnahmeeinrichtung ein Aufnahmetisch (10) ist, welcher zwischen den beiden Förderbändern (12, 22) angeordnet ist.

14. Vorrichtung nach Anspruch 13,
wobei an jedem Förderband (12, 22) ein Tisch (10) nach den Ansprüchen 8 bis 11 vorgesehen ist,
**dadurch gekennzeichnet, dass** der Aufnahmetisch (10) direkt in die Tische (10) der Förderbänder (12, 22) übergeht.

15. Vorrichtung nach Anspruch 14, nach Anspruch 9 und nach einem der vorstehenden Ansprüche,
**dadurch gekennzeichnet, dass** der Aufnahmetisch ebenfalls ein Gleittisch (10) ist.

16. Vorrichtung nach Anspruch 15,
**dadurch gekennzeichnet, dass** der Aufnahmetisch und die Tische der Förderbänder (12, 22) einen einheitlichen Tisch (10) mit einheitlicher Oberfläche (18) bilden.

17. Vorrichtung nach einem der Ansprüche 13 bis 16, nach einem der Ansprüche 8 bis 11 und nach einem der vorstehenden Ansprüche,
**dadurch gekennzeichnet, dass** der Aufnahmetisch und/oder der oder die Tische, in denen die Förderbänder (12,22) laufen, Lufttische (10) sind.

18. Vorrichtung nach Anspruch 16,
**dadurch gekennzeichnet, dass** der einheitliche Tisch zumindest teilweise ein einheitlicher Lufttisch (10) ist.

19. Vorrichtung nach einem der vorstehenden Ansprüche,
**dadurch gekennzeichnet, dass** mit Hilfe der Versetzeinrichtung (24) gleichzeitig mehrere sich nebeneinander befindende Blattlagen (8) versetzbar sind.

20. Verfahren zum Versetzen von mehreren Blattlagen (8) aus einer ersten Förderlinie (4), mit den Schritten:
die Blattlagen (8) werden auf der ersten Förderlinie (4) von einem ersten Förderband (12) in einer ersten Förderrichtung (20) transportiert,
der Transport der Blattlagen (8) in der ersten Förderrichtung (20) wird unterbrochen,
**gekennzeichnet durch** die Schritte:
die Blattlagen (8) werden beim Versetzen derselben, von der der ersten Förderlinie (4) abgewandten Seite der Blattlagen (8) ausgehend, von beiden Seiten her mittels heranschwenkbaren Greifelementen (36) von einer Versetzeinrichtung (24) ergriffen, die Blattlagen (8) werden **durch** Schieben von der Versetzeinrichtung (24) aus der Förderlinie (4, 6) parallel versetzt, auf eine Aufnahmeeinrichtung (10) zum Aufnehmen der aus der ersten Förderlinie (4) versetzten Blattlagen (8),
der Transport weiterer, sich auf der ersten Förderlinie (4) befindender Blattlagen (8) wird fortgesetzt, unmittelbar nachdem die Versetzeinrichtung (24) die erste Förderlinie (4) mit den zu versetzenden Blattlagen (8) verlassen hat.

21. Verfahren nach dem vorstehenden Anspruch,
**dadurch gekennzeichnet, daß** das Versetzen der Blattlagen (8) aus der ersten Förderlinie (4) im wesentlichen gleichzeitig mit der Unterbrechung des Transportes auf der ersten Förderlinie (4) durchgeführt wird.

22. Verfahren nach dem vorstehenden Anspruch,
**dadurch gekennzeichnet, dass** die Blattlagen (8) von der ersten Förderlinie (4) direkt auf eine parallel zur ersten Förderlinie (4) verlaufende zweite Förderlinie (6) versetzt werden.

23. Verfahren nach einem der drei vorstehenden Ansprüche,
**dadurch gekennzeichnet, daß** während des Versetzens der Blattlagen (8) die Blattlagen (8) auf ihrer dem Förderband (12) abgewandten Seite (52) während des Versetzens mit einer in Richtung auf das Förderband (12) wirkenden Kraft beaufschlagt werden.

24. Verfahren nach dem vorstehenden Anspruch,
**dadurch gekennzeichnet, dass** die Kraft auf die Blattlagen (8) nur während des Versetzens der Blattlagen (8) einwirkt.

## Claims

1. Device for transposing a number of quires of sheets (8), in particular of reams of paper, out of a first conveyer line (4),
having a first conveyer belt (12) having a first direction of conveyance (20) for transporting the quires of sheets (8) on the first conveyer line (4),
having a transposing apparatus (24) for transposing the quires of sheets (8) out of the first conveyer line (4), and
having a receiving apparatus (10) for receiving the quires of sheets (8) transposed out of the first conveyer line (4),
**characterised in that** the transposing apparatus (24)
- is disposed, in a manner spaced apart from the quires of sheets (8), on that first side of said quires of sheets (8) which faces away from the conveyer belt (12),
- grasps the quires of sheets (8) from the side, starting from that side of said quires of sheets (8) which faces away from the first conveyer belt (12), when said quires of sheets (8) are transposed,
- is a slide (26) which can be brought into engagement with the quires of sheets (8) for the purpose of transposing them,
under which circumstances the slide (26) is located in a manner spaced apart from the quires of sheets (8) when in an inoperative position and, for the purpose of transposing said quires of sheets (8) in a parallel manner, grasps the latter, on their two sides that extend parallel to the direction of conveyance (20), with the aid of gripping elements (36) capable of being swivelled towards the sides of said quires of sheets (8), and displaces them in a parallel manner.

2. Device according to claim 1,
**characterised in that** the gripping elements are swivelling flaps (36).

3. Device according to claim 2,
**characterised in that** the axis of swivelling (40) of the swivelling flaps (36) extends parallel to the direction of conveyance.

4. Device according to claim 3,
**characterised in that**, when the slide (26) is in the inoperative position, the swivelling flaps (36) are folded upwards into a plane extending substantially parallel to the plane of the conveyer belt (12) while, for the purpose of laterally grasping the quires of sheets (8) to be transposed, said swivelling flaps (36) are swivelled, by about 90° downwards in the direction of the conveyer belt (12), laterally towards said quires of sheets (8).

5. Device according to claim 4,
**characterised in that**, after the transposing movement has been completed, the swivelling flaps (36) can be folded back into the plane extending parallel to the conveyer belt (12), so that the slide (26), which is thus located in its inoperative position, can be moved back again, in a manner spaced apart from the plane of the upper side (52) of the quires of sheets (8), into its position above the first conveyer belt (12).

6. Device according to one of the preceding claims,
**characterised in that** the slide (26) is capable of travelling along a guide (28) disposed above the conveyer belt (12), transversely to the direction of conveyance (20).

7. Device according to one of the preceding claims,
**characterised in that**
the transposing apparatus (24) transposes the quires of sheets (8) substantially transversely (50) to the direction of conveyance (20).

8. Device according to one of the preceding claims,
**characterised in that** the conveyer belt (12) runs in a recess in a table (10).

9. Device according to claim 8,
**characterised in that** the table is a sliding table (10) on which the quires of sheets (8) transported by the conveyer belt (12) are able to slide.

10. Device according to claim 9,
**characterised in that** the conveyer belt (12) can be lowered below a sliding plane (18) of the sliding table (10) for the purpose of transposing the quires of sheets (8).

11. Device according to claim 10,
**characterised in that** the lowering of the conveyer belt (12) takes place synchronously with the transposing of the quires of sheets (8).

12. Device according to one of the preceding claims, having a second conveyer line (6) which has a second conveyer belt (22) having a second direction of conveyance (20) extending parallel to the first direction of conveyance (20),
**characterised in that** the quires of sheets (8) can be transposed, with the aid of the transposing apparatus (24), from one of the conveyer belts (12, 22) to the other conveyer belt (12, 22) in each case.

13. Device according to claim 12,
**characterised in that** the receiving apparatus is a receiving table (10) which is disposed between the two conveyer belts (12, 22).

14. Device according to claim 13,
wherein a table (10) according to claims 8 to 11 is provided on each conveyer belt (12, 22),
**characterised in that** said receiving table (10) passes over directly into the tables (10) of the conveyer belts (12, 22).

15. Device according to claim 14, claim 9 and one of the preceding claims,
**characterised in that** the receiving table is likewise a sliding table (10).

16. Device according to claim 15,
**characterised in that** the receiving table and the tables of the conveyer belts (12, 22) form an integrated table (10) with an integrated surface (18).

17. Device according to one of claims 13 to 16, one of claims 8 to 11 and one of the preceding claims,
**characterised in that** the receiving table and/or the table or tables in which the conveyer belts (12, 22) run, are air tables (10).

18. Device according to claim 16,
**characterised in that** the integrated table is, at least partly, an integrated air table (10).

19. Device according to one of the preceding claims,
**characterised in that**, with the aid of the transposing apparatus (24), a number of quires of sheets (8) located side by side can be transposed simultaneously.

20. Method of transposing a number of quires of sheets (8) out of a first conveyer line (4), comprising the following steps:
the quires of sheets (8) are transported, on the first conveyer line (4), by a first conveyer belt (12) in a first conveying apparatus (20),
the transport of the quires of sheets (8) in the first direction of conveyance (20) is interrupted,
**characterised by** the following steps:
when the quires of sheets (8) are transposed, they are grasped by both sides, starting from that side of said quires of sheets (8) which faces away from the first conveyer line (4), by a transposing apparatus (24), said quires of sheets (8) are transposed out of the conveyer line (4, 6) in a parallel manner, as a result of pushing by the transposing apparatus (24), onto a receiving apparatus (10) for receiving the quires of sheets (8) transposed out of the first conveyer line (4), and the transport of further quires of sheets (8) located on the first conveyer line (4) is continued immediately after the transposing apparatus (24) has left the first conveyer line (4) with the quires of sheets (8) to be transposed.

21. Method according to the preceding claim,
**characterised in that** the transposing of the quires of sheets (8) out of the first conveyer line (4) is performed substantially simultaneously with the interrupting of the transport on said first conveyer line (4).

22. Method according to the preceding claim,
**characterised in that** the quires of sheets (8) are transposed from the first conveyer line (4) directly onto a second conveyer line (6) extending parallel to said first conveyer line (4).

23. Method according to one of the three preceding claims,
**characterised in that**, during the transposing of the quires of sheets (8), the latter are acted upon during the transposing operation, on their side (52) that faces away from the conveyer belt (12), with a force acting in the direction of said conveyer belt (12).

24. Method according to the preceding claim,
**characterised in that** the force acts upon the quires of sheets (8) only during the transposing of the latter.

## Revendications

1. Dispositif pour le déplacement de plusieurs piles de feuilles de papier (8), en particulier des rames de papier, hors d'une première ligne de transport (4),
pourvu d'un premier convoyeur à bande (12) avec un premier dispositif de transport (20) permettant de transporter les piles de feuilles de papier (8) sur la première ligne de transport (4),
pourvu d'un dispositif de déplacement (24) des piles de feuilles de papier (8) hors de la première ligne de transport (4),
pourvu d'un dispositif de réception (10) des piles de feuilles de papier (8) déplacées hors de la première ligne de transport (4),
**caractérisé en ce que** le dispositif de déplacement (24)
- est agencé à distance des piles de feuilles de papier (8) sur le premier côté desdites piles de feuilles de papier (8) opposé au premier convoyeur à bande (12);
- saisit les piles de feuilles de papier (8) par le côté lors de leur déplacement, partant du côté de ladite pile de feuilles de papier (8) opposé au premier convoyeur à bande (12);
- consiste en une pièce coulissante (26) pouvant être mise en contact avec les piles de feuilles de papier (8), afin de déplacer ces dernières,
ladite pièce coulissante (26) se trouvant à distance des piles de feuilles de papier (8) en position de repos, et saisissant, lors du déplacement parallèle des piles de feuilles de papier (8), ces dernières par les deux côtés parallèles à la direction de déplacement (26) au moyen d'éléments de préhension (36) pouvant être rapprochés par pivotement des bords des piles de feuilles de papier (8), les déplaçant ensuite parallèlement à leur orientation de départ.

2. Dispositif selon la revendication 1,
**caractérisé en ce que** les éléments de préhension sont des volets pivotants (36).

3. Dispositif selon la revendication 2,
**caractérisé en ce que** les axes de pivotement (40) des volets pivotants (36) sont parallèles à la direction de déplacement.

4. Dispositif selon la revendication 3,
**caractérisé en ce qu'**en position de repos des pièces coulissantes (26), lesdits volets pivotants (36) sont rabattus vers le haut dans un plan essentiellement parallèle au plan du convoyeur à bande (12), alors que les volets pivotants (36) saisissant latéralement les piles de feuilles de papier (8) devant être déplacées sont pivotés d'environ 90° vers le bas, en direction du convoyeur à bande (12), afin de les rapprocher latéralement des piles de feuilles de papier (8).

5. Dispositif selon la revendication 4,
**caractérisé en ce qu'**en fin de déplacement, les volets pivotants (36) peuvent être ramenés par pivotement dans le plan parallèle au plan du convoyeur à bande (12), de manière à ce que la pièce coulissante (26), se trouvant ainsi en position de repos, puisse être reconduit dans sa position au dessus du premier convoyeur à bande (12), tout en maintenant une distance du plan de la face supérieure (52) des piles de feuilles de papier (8).

6. Dispositif selon l'une quelconque des revendications précédentes,
**caractérisé en ce que** la pièce coulissante (26) peut être déplacée le long d'un rail guide (28) disposé au dessus du convoyeur à bande (12), transversalement à la direction de déplacement (20).

7. Dispositif selon l'une quelconque des revendications précédentes,
**caractérisé en ce que** le dispositif de déplacement (24) déplace les piles de feuilles de papier (8) en direction essentiellement transversale (50) à la direction de déplacement (20).

8. Dispositif selon l'une quelconque des revendications précédentes,
**caractérisé en ce que** le convoyeur à bande (12) se trouve dans un creux pratiqué dans une table (10).

9. Dispositif selon la revendication 8,
**caractérisé en ce que** la table est une table à glissières (10), sur lesquelles les piles de feuilles de papier (8) transportées par le convoyeur à bande (12) peuvent glisser.

10. Dispositif selon la revendication 9,
**caractérisé en ce que** l'on peut abaisser le convoyeur à bande (12) servant à déplacer les piles de feuilles de papier (8) au dessous du plan de glissement (18) de la table à glissières (10).

11. Dispositif selon la revendication 10,
**caractérisé en ce que** l'abaissement du convoyeur à bande (12) a lieu de manière synchrone au déplacement de la pile de feuilles de papier (8).

12. Dispositif selon l'une quelconque des revendications précédentes,
pourvu d'une seconde ligne de transport (6) présentant un second convoyeur à bande (22) avec un second dispositif de déplacement (20) parallèle au premier dispositif de déplacement (20),
**caractérisé en ce que** les piles de feuilles de papier (8) peuvent être déplacées d'un des convoyeurs à bande (12, 22) sur l'autre convoyeur à bande (12, 22), au moyen d'un dispositif de déplacement (24).

13. Dispositif selon la revendication 12,
**caractérisé en ce que** le dispositif de réception est un table de réception (10), installée entre les deux convoyeurs à bande (12, 22).

14. Dispositif selon la revendication 13,
une table (10) selon les revendications 8 à 11 étant prévue sur chaque convoyeur à bande (12, 22),
**caractérisé en ce que** la table de réception (10) passe directement aux tables (10) des convoyeurs à bande (12, 22), se confondant avec ces dernières.

15. Dispositif selon la revendication 14, la revendication 9 et l'une quelconque des revendications précédentes,
**caractérisé en ce que** la table de réception est également une table à glissières (10).

16. Dispositif selon la revendication 15,
**caractérisé en ce que** la table de réception et les tables des convoyeurs à bande (12, 22) forment une table unitaire (10) pourvue d'une surface unitaire (18).

17. Dispositif selon l'une quelconque des revendications 13 à 16, l'une quelconque des revendications 8 à 11 et l'une quelconque des revendications précédentes,
**caractérisé en ce que** la table de réception et/ou la ou les table(s) dans lesquelles se trouvent les convoyeurs à bande (12, 22), sont des tables pneumatiques (10).

18. Dispositif selon la revendication 16,
**caractérisé en ce que** la table unitaire est au moins partiellement un table pneumatique (10).

19. Dispositif selon l'une quelconque des revendications précédentes,
**caractérisé en ce que** plusieurs piles de feuilles de papier (8) situées l'une à côté de l'autre peuvent être déplacées au moyen d'un dispositif de déplacement (24).

20. Procédé de déplacement de plusieurs piles de feuilles de papier (8) hors d'une première ligne de transport (4) présentant les étapes suivantes:
- les piles de feuilles de papier (8) sont transportées sur la première ligne de transport (4) d'un premier convoyeur à bande (12) sur un premier dispositif de transport (20),
- les piles de feuilles de papier (8) sont transportées dans le premier dispositif de transport (20),
**caractérisé par** les étapes suivantes:
- lors de leur déplacement, les piles de feuilles de papier (8) sont saisies des deux côtés, partant du côté desdites piles de feuilles de papier (8) opposé à la première ligne de transport (4), par un dispositif de déplacement (24),
- les piles de feuilles de papier (8) sont poussées, tout en demeurant parallèles à leur orientation première, hors de la ligne de transport (4, 6), par le dispositif de déplacement (24), sur un dispositif de réception (10) destiné à recevoir les piles de feuilles de papier (8) poussées hors de la première ligne de transport (4),
le transport d'autres piles de feuilles de papier (8) se trouvant sur la première ligne de transport (4) étant repris immédiatement après que le dispositif de déplacement (24) ait quitté la première ligne de transport (4) avec la pile de feuilles de papier devant être déplacée (8).

21. Procédé selon la revendication précédente,
**caractérisé en ce que** le déplacement des piles de feuilles de papier (8) hors de la première ligne de transport (4) a lieu essentiellement en même temps que l'interruption du transport sur ladite première ligne de transport (4).

22. Procédé selon la revendication précédente,
**caractérisé en ce que** les piles de feuilles de papier (8) sont déplacées directement de la première ligne de transport (4) sur une seconde ligne de transport (6), parallèle a ladite première ligne de transport (4).

23. Procédé selon l'une quelconque des trois revendications précédentes,
**caractérisé en ce que** durant le déplacement de la pile de feuilles de papier (8), une force agissant dans la direction du convoyeur à bande (12) est exercée sur le côté (52) de ladite pile de feuilles de papier (8) opposé audit convoyeur à bande (12).

24. Procédé selon la revendication précédente,
**caractérisé en ce que** la force exercée sur les piles de feuilles de papier (8) n'agit que durant le déplacement de ces dernières.
